# EUROPÄISCHE PATENTSCHRIFT

(11) **EP 0 643 677 B1**
(45) Veröffentlichungstag und Bekanntmachung des Hinweises auf die Patenterteilung: **29.10.1997**
(21) Anmeldenummer: 93912822.9
(22) Anmeldetag: 28.05.1993
(51) Int. Cl.: C02F 9/00, C02F 1/44

(54) **VERFAHREN ZUR HERSTELLUNG UND BEREITSTELLUNG VON WASCHWASSER FÜR EINE WASCHANLAGE SOWIE WASCHANLAGE**
PROCESS FOR PRODUCING AND PROCESSING WASH WATER IN A WASHING INSTALLATION, AND WASHING INSTALLATION
PROCEDE DE PRODUCTION ET DE TRAITEMENT D'EAU DE LAVAGE DANS UNE INSTALLATION DE LAVAGE, ET INSTALLATION DE LAVAGE

(30) Priorität: 02.06.1992 DE 4218114
(43) Veröffentlichungstag der Anmeldung: 22.03.1995
(73) Patentinhaber: Lauer, Günter, D-79539 Lörrach (DE)
(72) Erfinder: LAUER, Günter, D-7850 Lörrach (DE); RIEDEL, Thomas, D-8902 Neusäss (DE)
(74) Vertreter: Schmitt, Hans, Dipl.-Ing.
(86) Internationale Anmeldenummer: EP9301349
(87) Internationale Veröffentlichungsnummer: WO9324419

(56) Entgegenhaltungen:
- EP-A- 0 394 777
- EP-A- 0 465 968
- DE-A- 2 409 864
- DE-A- 3 406 117
- GB-A- 2 247 191
- US-A- 5 160 430

## Beschreibung

Die Erfindung betrifft ein Verfahren zur Herstellung und Bereitstellung von Waschwasser für eine Waschanlage, insbesondere eine Autowaschanlage, bei dem das Waschwasser in zumindest einem Waschvorgang zur Reinigung eines Kraftfahrzeuges oder dergleichen verwendet und nach einem Waschvorgang zumindest teilweise wiederverwendet wird wobei wenigstens eine Teilmenge des abgeführten Waschwassers dazu aufgefangen und als Rohwasser einer Filteranlage oder dergleichen Aufbereitungsvorrichtung zugeführt wird, die zumindest eine semipermeable Membran hat, welche eine Teilmenge des zugeführten Rohwassers unter der treibenden Kraft einer Druckdifferenz als Reinwasser passiert, das mindestens einem nachfolgenden Waschvorgang als Waschwasser zugeführt wird.

Die Erfindung befaßt sich auch mit einer Waschanlage, insbesondere einer Autowaschanlage, mit zumindest einem Brausekopf oder dergleichen Waschwasser-Auslaß, welcher zum Ausbringen des Waschwassers auf ein Kraftfahrzeug oder dergleichen zu reinigenden Gegenstand vorgesehen ist, wobei die Waschanlage eine Auffangeinrichtung zum Auffangen des Waschwassers nach jedem Waschvorgang hat, die mit einer Wasser-Aufbereitungsvorrichtung zum Aufbereiten zumindest eines Teils des aufgefangenen Wassers verbunden ist und deren Filtrat- oder Reinwasserauslaß mit wenigstens einem Waschwasser-Auslaß der Waschanlage verbunden ist, wobei die Aufbereitungsvorrichtung wenigstens eine semipermeable Membran hat, die einen Rohwasserbereich der Aufbereitungsvorrichtung von einem Reinwasserbereich trennt.

Man kennt bereits verschiedene Autowaschanlagen, bei denen das Waschwasser während der einzelnen Waschstationen oder Waschstufen über zumindest einen Brausekopf, eine Waschbürste oder dergleichen Waschwasser-Auslaß auf das zu reinigende Kraftfahrzeug aufgebracht wird. Bei den vorbekannten Waschanlagen wird das Waschwasser nach jedem Waschvorgang abgeführt und meist in die Kanalisation geleitet. Dies bedeutet einen erheblichen Wasserverbrauch sowie einen entsprechend hohen Abwasseranfall.

Aus der GB 2 247 191 kennt man bereits eine Kraftfahrzeug-Waschanlage, bei der eine Wiederverwendung des Waschwassers vorgesehen ist. Um das Waschwasser wiederverwenden zu können, weist diese vorbekannte Waschanlage eine Aufbereitungsvorrichtung auf, der ein Wasserbehälter zugeordnet ist. Dieser Wasserbehälter ist durch Trennwände in drei Kammern unterteilt. Dabei wird das aufgefangene Waschwasser in eine erst Kammer des Wasserbehälters geleitet, die mit einer als Röhrenmodul ausgebildeten semipermeablen Membran verbunden ist. Sowohl der Rohwassereinlaß als auch der Permeatauslaß dieser Membran ist mit der ersten Kammer des Wasserbehälters verbunden, während der Konzentratauslaß zu einem separaten Konzentratbehälter führt. Eine zweite Kammer des Wasserbehälters ist einem Frischwasserzulauf zugeordnet und über ein Kohlefilter mit dessen dritter Kammer verbunden.

Durch verschiedene Mischventile kann der Wasservorrat aus den einzelnen Kammern sowie aus dem Konzentratbehälter derart miteinander vermischt werden, daß eine Fleckenbildung durch die im Waschwasser gelösten Stoffe vermieden wird. Da das Röhrenmodul in der Aufbereitungsvorrichtung der vorbekannten Waschanlage nur eine begrenzte Menge des benötigten Waschwassers aufbereiten kann, ist eine solche Vermischung und Streckung des aufbereiteten Waschwassers erforderlich. Da größere Mengen des aufbereiteten Waschwassers nicht zur Verfügung stehen, ist dieses vor allem für einen abschließenden Reinigungsvorgang vorgesehen. Bei dieser vorbekannten Waschanlage kann zwar eine Fleckenbildung auf der Fahrzeugoberfläche durch die im Waschwasser gelösten Stoffe vermieden werden, eine wesentliche Wassereinsparung ist mit dieser vorbekannten Vorrichtung jedoch nicht verbunden.

Es besteht daher insbesondere die Aufgabe, ein Verfahren der eingangs erwähnten Art zu schaffen, das mit einem demgegenüber allenfalls nur geringen Wasserverbrauch verbunden ist. Gleichzeitig besteht die Aufgabe, eine Autowaschanlage oder dergleichen Waschanlage insbesondere zur Durchführung des erfindungsgemäßen Verfahrens zu schaffen.

Die erfindungsgemäße Lösung dieser Aufgabe besteht bei dem Verfahren der eingangs erwähnten Art insbesondere darin, daß das Waschwasser nach jedem Waschvorgang in einem im wesentlichen geschlossenen Wasserkreislauf für nachfolgende Waschvorgänge wiederverwendet wird, daß die Fließrichtung des an der als Wickelmodul ausgebildeten semipermeablen Membran vorbeiströmenden Rohwassers in Zeitintervallen umgekehrt oder gewechselt wird und daß die Restmenge des an der Membran vorbeiströmenden Rohwassers den Rohwasserbereich der Membran als Konzentrat verläßt und erneut einer semipermeablen Membran und/oder einem nachfolgenden Waschvorgang mit vorzugsweise geringeren Anforderungen an die Wasserqualität zugeführt wird. Bei dem erfindungsgemäßen Verfahren wird also das nach jedem Waschvorgang abgeführte Waschwasser in einem im wesentlichen geschlossenen Wasserkreislauf für nachfolgende Waschvorgänge wiederverwendet. Um dennoch eine möglichst hohe Wasserqualität des Waschwassers zu erreichen, wird das nach den Waschvorgängen abgeführte und aufgefangene Waschwasser in einer Aufbereitungsvorrichtung zumindest weitgehend gereinigt und also Reinwasser nachfolgenden Waschvorgängen zugeführt.

Zum Aufbereiten des Waschwassers ist bei dem erfindungsgemäßen Verfahren eine Aufbereitungsvorrichtung mit zumindest einer als Wickelmodul ausgebildeten semipermeablen Membran vorgesehen. Während eine Teilmenge des als Rohwasser zugeführten Waschwassers unter der treibenden Kraft einer Druckdifferenz die Membran als Reinwasser passiert und nachfolgenden Waschvorgängen zugeführt wird, verläßt die Restmenge des an der Membran vorbeiströmenden Rohwassers den Rohwasserbereich der Membran als Konzentrat und wird erneut einer semipermeablen Membran und/oder einem nachfolgenden Waschvorgang mit geringeren Anforderungen an die Wasserqualität zugeführt. Insbesondere ein solches, mit Hilfe eines Wickelmoduls aufbereitetes Wasser hat eine hohe Wasserqualität; wegen seiner vergleichsweise geringen und durch Umkehrosmose reduzierten Salzkonzentration ist bei einem derart aufbereiteten Wasser nur eine Zufuhr vergleichsweise geringer Menge von Waschmitteln oder dergleichen Chemikalien erforderlich, was sich auf die Aufsalzung des im Wasserkreislauf geführten Waschwassers günstig auswirkt und aufgrund des geringeren osmotischen Gegendrucks auch einen geringen Betriebsdruck beispielsweise für eine Umkehrosmose erforderlich macht.

Um das der Aufbereitungsvorrichtung zugeführte Waschwasser nach dem Filter- oder Aufbereitungsvorgang möglichst umfassend zu nutzen, wird bei dem erfindungsgemäße Verfahren das Reinwasser vorzugsweise nachfolgenden Waschvorgängen mit höheren Anforderungen an die Wasserqualität und das Konzentrat zweckmäßigerweise solchen nachfolgenden Wasservorgängen mit demgegenüber geringeren Anforderungen an die Wasserqualität zugeführt. Ist jedoch für die Waschvorgänge der Waschanlage eine hohe Wasserqualität des verwendeten Waschwassers erforderlich, so kann es zweckmäßig sein, wenn die an der Membran vorbeiströmende Konzentrat-Restmenge dem nach den Waschvorgängen aufgefangenen Waschwasser beigemischt und erneut der Membran als Rohwasser zugeführt wird.

Da bei dem erfindungsgemäßen Verfahren das Waschwasser in einem im wesentlichen geschlossenen Wasserkreislauf für nachfolgende Waschvorgänge wiederverwendet wird, kann es eventuell zunehmend mit Schmutzpartikeln befrachtet werden. Um auch bei einer hohen Verschmutzung des abgeführten und der Aufbereitungsvorrichtung zugeführten Waschwassers lange Betriebs- und Membranstandzeiten diese Vorrichtung zu erzielen, ist bei dem erfindungsgemäßen Verfahren vorgesehen, daß die Fließrichtung des an der Membran vorbeiströmenden Rohwassers in Zeitintervallen umgekehrt oder gewechselt wird.

So sind herkömmliche und zumindest eine semipermeable Membran aufweisende Membranmodule, insbesondere die auch aus Kostengründen bevorzugten Wickelmodule, gegen Verunreinigungen und Ausfällungen empfindlich. Solchen Modulen wird daher regelmäßig ein siebartiges Vorfilter in Strömungsrichtung vorgeschaltet, welches einer Verschmutzung der Membranen durch größere Partikel entgegenwirken soll und bei starker Verschmutzung des Rohwassers häufig gewechselt werden muß. Dennoch verschmutzen die Membranen der vorbekannten Membranmodule während der Betriebszeit insbesondere in dem der Rohwasser-Strömungsrichtung zugewandten Endbereich. Durch die hier vorgesehene Umkehr der Fließrichtung des an der Membran oder den Membranen vorbeiströmenden und als Rohwasser zugeführten Waschwassers werden beide Endbereiche des verwendeten Membranmoduls benützt. Dabei werden die nach den Waschvorgängen an der Membranoberfläche angelagerten Schmutzpartikel herausgespült, die sich vor der Fließrichtungsumkehr vor allem in dem der Rohwasser-Strömung zugewandten Endbereich des Wickelmoduls oder dergleichen Membranmoduls angelagert haben, während der bis dahin mit Schmutzpartikeln geringer belastete gegenüberliegende Endbereich des Moduls bis zur nächsten Fließrichtungsumkehr den in Strömungsrichtung vorderen Bereich bildet. Durch diese beidseitige Ausnützung des Moduls lassen sich dessen Betriebs- und Membranstandzeiten wesentlich erhöhen sowie die erforderlichen Wartungsintervalle der bei dem erfindungsgemäßen Verfahren verwendeten Aufbereitungsvorrichtung vergrößern. Da mit jeder Fließrichtungsumkehr der bis dahin stärker verschmutzte Modulbereich vorübergehend den in Strömungsrichtung hinteren und vom abgeführten Waschwasser oder Rohwasser durchgespülten Bereich beldet, kann auf sonst übliche, dem Modul vorgeschaltete Vorfilter ansich verzichtet werden, was eine nicht unerhebliche Platz- und Kostenersparnis bedeutet.

Nach einem weiterbildenden Vorschlag von eigener schutzwürdiger Bedeutung ist vorgesehen, daß mittels einer zeitweisen Reduzierung oder Unterbrechung des Reinwasserabflusses an der Membran eine Erhöhung des statischen Wasserdrucks auf der Reinwasserseite der Membran bewirkt wird und daß nach einer statischen Druckerhöhung auf der Reinwasserseite, insbesondere nach einer Angleichung des statischen Wasserdrucks auf beiden Seiten der Membran, der auf der Rohwasserseite der Aufbereitungsvorrichtung bestehende statische Wasserdruck relativ zu dem auf der Reinwasserseite bestehenden statischen Wasserdruck in Zeitintervallen kurzzeitig, vorzugsweise schlagartig, gesenkt wird. Insbesondere durch eine schlagartige Absenkung des auf der Rohwasserseite der Aufbereitungsvorrichtung bestehenden statischen Wasserdrucks relativ zu dem auf der Reinwasserseite bestehenden statischen Wasserdruck wird zwar die Waschwasser- oder Reinwasserherstellung unterbrochen, jedoch führt diese vorübergehende Druckänderung zu einer schwallartigen Rückströmung des Reinwassers von dem kurzfristig den höheren statischen Druck aufweisenden Reinwasserbereich zum Rohwasserbereich. Diese Rückströmung bewirkt eine Durchspülung der Membranwände sowie eine Reinigung des Moduls in entsprechenden Zeitintervallen, so daß höhere Membranstandzeiten begünstigt werden. Dabei kann beispielsweise zur Senkung des auf der Rohwasserseite bestehenden statischen Wasserdruckes die Fließgeschwindigkeit und damit der dynamische Wasserdruck des an der Membran vorbeiströmenden abgeführten Waschwassers oder Rohwassers erhöht werden.

Die erfindungsgemäße Lösung bei der Autowaschanlage oder dergleichen Waschanlage der eingangs erwähnten Art besteht insbesondere darin, daß die semipermeable Membran als Wickelmodul ausgebildet ist, daß die Fließrichtung des auf der Rohwasserseite an dieser Membran der Aufbereitungsvorrichtung vorbeiströmenden Wassers mittels einer Strömungs-Umkehreinrichtung umkehrbar ist und dazu die zum Rohwasserbereich der Aufbereitungsvorrichtung führenden Vorrichtungsöffnungen in Zeitintervallen wechselweise als ein zuströmseitig mit der Auffangeinrichtung verbundener Wassereinlaß oder als ein zu einem Waschwasser-Auslaß der Waschanlage und/oder zu einer semipermeablen Membran führender Wasserauslaß vorgesehen sind, und daß der Reinwasserbereich der Aufbereitungsvorrichtung mit wenigstens einem weiteren Waschwasser-Auslaß der Waschanlage verbunden ist. Bei der erfindungsgemäßen Waschanlage wird das Waschwasser nach den einzelnen Waschvorgängen also nicht in die Kanalisation abgeführt, sondern zunächst in einer Auffangeinrichtung gesammelt, von wo es einer Wasser-Aufbereitungsvorrichtung zugeführt wird. In dieser Aufbereitungsvorrichtung wird zumindest ein Teil des nach den Waschvorgängen aufgefangenen Waschwassers aufbereitet und gereinigt und anschließend über den Filtrat- oder Reinwasserauslaß der Aufbereitungsvorrichtung zu zumindest einem Waschwasser-Auslaß geführt. An diesem Waschwasser-Auslaß kann das in der Aufbereitungsvorrichtung erzeugte Filtrat oder Reinwasser erneut als Waschwasser zur Reinigung eines Kraftfahrzeuges oder dergleichen verwendet werden. Bei der erfindungsgemäßen Waschanlage wird das Waschwasser somit in einem im wesentlichen geschlossenen Wasserkreislauf geführt, praktisch ohne daß Abwasser aus den einzelnen Waschvorgängen in den Abwasserkanal eingeleitet werden müßte.

Zur Aufbereitung des Waschwassers hat die Aufbereitungsvorrichtung zumindest eine semipermeable Membran, die als Wickelmodul ausgebildet ist und die einen Rohwasserbereich der Aufbereitungsvorrichtung von einem Reinwasserbereich trennt. Um auch bei einem durch vorangegangene Waschvorgänge stark verschmutzten Waschwasser lange Betriebszeiten und Membranstandzeiten der erfindungsgemäßen Waschanlage und ihrer Aufbereitungsvorrichtung zu erzielen und um den Wasserkreislauf des Waschwassers für eine möglichst lange Zeitdauer aufrechtzuerhalten, ist bei der erfindungsgemäßen Waschanlage vorgesehen, daß die Fließrichtung des auf der Rohwasserseite an der Membran der Aufbereitungsvorrichtung vorbeiströmenden Wassers mittels einer Strömungs-Umkehreinrichtung umkehrbar ist und daß dazu die zum Rohwasserbereich der Membran führenden Vorrichtungsöffnungen der Aufbereitungsvorrichtung in Zeitintervallen wechselweise als Wassereinlaß oder Wasserauslaß dienen.

Um für die einzelnen Waschvorgänge der erfindungsgemäßen Waschanlage stets eine ausreichende Wassermenge in der erforderlichen Wasserqualität zur Verfügung zu haben, ist bei der erfindungsgemäßen Waschanlage vorgesehen, daß der Reinwasserbereich der Aufbereitungsvorrichtung mit wenigstens einem weiteren Waschwasser-Auslaß der Waschanlage verbunden ist, während die mit dem Rohwasserbereich verbundenen Waschwasser-Auslässe für Waschvorgänge oder Waschstationen mit demgegenüber geringeren Anforderungen an die Wasserqualität vorgesehen sind oder erneut zu einer semipermeablen Membran führen. Dabei kann beispielsweise das aus den mit dem Rohwasserbereich verbundenen Waschwasser-Auslässen ausströmende Konzentrat zur Vor- oder Hauptwäsche benutzt werden.

Eine Weiterbildung gemäß der Erfindung sieht vor, daß die Aufbereitungsvorrichtung zumindest zwei semipermeable Membranen hat, von denen die eine Membran einer ersten Aufbereitungsstufe und von denen die andere Membran einer zweiten Aufbereitungsstufe zugeordnet ist, daß der Rohwasserbereich der ersten Aufbereitungsstufe zu- und abströmseitig mit der Auffangeinrichtung und ihr Reinwasserbereich mit dem Rohwasserbereich der zweiten Aufbereitungsstufe verbunden ist und daß der Reinwasserbereich sowie der Rohwasserbereich der zweiten Aufbereitungsstufe abströmseitig jeweils zu zumindest einem Waschwasser-Auslaß führen. In einer solchen zweistufigen Aufbereitungsvorrichtung hat das in der zweiten Aufbereitungsstufe erzeugte Reinwasser oder Permeat nur noch einen sehr niedrigen Salzgehalt, selbst wenn das der Aufbereitungsvorrichtung als Rohwasser zugeführte Waschwasser ursprünglich eine hohe Salzkonzentration aufwies. Auch das an der Membran der zweiten Aufbereitungsstufe vorbeiströmende Konzentrat weist im Vergleich zu einem vorgefilterten Wasser eine hohe Wasserqualität auf und kann in der erfindungsgemäßen Waschanlage somit gut zumindest zur Vor- und/oder Hauptwäsche verwendet werden.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform der Erfindung verwirklicht sein.

Es zeigt in zum Teil stark schematisierter Darstellung:
- **Fig. 1**: eine Autowaschanlage mit einer Wasser-Aufbereitungsvorrichtung, deren Reinwasserbereich mit vier Waschwasser-Auslässen verbunden ist und deren Rohwasserbereich zu einer als Sammelbecken ausgebildeten Auffangeinrichtung führt,
- **Fig. 2**: eine Waschanlage, ähnlich der aus Figur 1, bei der ein Teil ihrer Waschwasser-Auslässe mit dem Reinwasserbereich der Aufbereitungsvorrichtung und der andere Teil der Waschwasser-Auslässe mit dem Rohwasserbereich verbunden sind,
- **Fig. 3**: eine Waschanlage, bei der die Fließrichtung des auf der Rohwasserseite der Aufbereitungsvorrichtung an einer Membran vorbeiströmenden Wassers mittels einer Strömungs-Umkehreinrichtung umkehrbar ist und
- **Fig. 4**: eine Waschanlage mit einer zweistufigen Aufbereitungsvorrichtung für das aufgefangene Waschwasser.

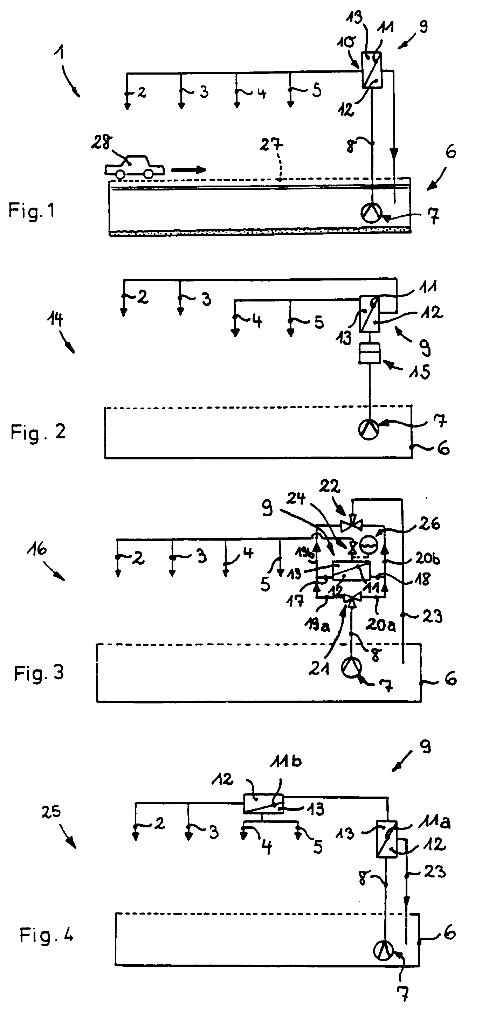

Figur 1 zeigt eine Autowaschanlage 1, welche vier nicht näher dargestellte Brauseköpfe, Waschbürsten oder dergleichen Waschwasser-Auslässe 2 bis 5 für jeweils einen Waschgang hat. Diese Waschwasser-Auslässe 2 bis 5 sind zum Ausbringen des Waschwassers auf ein Kraftfahrzeug beispielsweise während eines Vorwasch- (Auslaß 2), Hauptwasch- (Auslaß 3), Wachswasch- (Auslaß 4) und Klarwaschvorganges (Auslaß 5) vorgesehen. Zum Auffangen des Waschwassers nach jedem Waschvorgang weist die Waschanlage 1 eine Auffangeinrichtung 6 auf, die als ein vergleichsweise tiefes Sedimentations- und Sammelbecken ausgebildet ist. In dieser Auffangeinrichtung 6 sammelt sich das nach den Waschvorgängen abgeführte Waschwasser an, wobei sich gröbere Schmutzpartikel am Boden des Sammelbeckens ablagern und Öle sowie andere Leichtstoffe sich an der Oberfläche des angesammelten Waschwassers absetzen.
Die Auffangeinrichtung 6 ist über eine Förderpumpe 7 sowie eine Zufuhrleitung 8 mit einer Wasser-Aufbereitungsvorrichtung 9 verbunden, in welcher das nach den Waschvorgängen abgeführte und in der Auffangeinrichtung 6 aufgefangene Waschwasser aufbereitet, gereinigt und als Reinwasser für die nachfolgenden Waschvorgänge bereitgestellt wird. Dazu ist der Filtrat-, Permeat- oder Reinwasserauslaß 10 der Aufbereitungsvorrichtung 9 mit jedem der Waschwasser-Auslässe 2 bis 5 der Waschanlage 1 verbunden.

Wie Figur 1 zeigt, ist die Förderpumpe 7 beziehungsweise die zuströmseitige Mündung der Zufuhrleitung 8 in einem Bereich der als Sammelbecken ausgebildeten Auffangeinrichtung 6 angeordnet, der oberhalb der am Boden der Auffangeinrichtung 6 angesammelten Schmutzpartikel und unterhalb der auf der Wasseroberfläche schwimmenden Leichtstoffe angeordnet ist. Die unterhalb der Auslässe 2 bis 5 angeordnete Auffangeinrichtung 6 ist mittels eines Gitters 27 oder dergleichen wasserdurchlässigen Abdeckung abgedeckt, die mit den zu reinigenden Kraftfahrzeugen oder dergleichen befahren werden kann. Die Auffangeinrichtung 6 kann bei entsprechender Ausgestaltung aber auch gut außerhalb des Fahrweges des zu reinigenden Fahrzeuges angeordnet werden.
Die Aufbereitungsvorrichtung 9 der Waschanlage 1 aus Figur 1 hat eine semipermeable Membran 11, die einen Rohwasserbereich 12 der Aufbereitungsvorrichtung 9 von einem Reinwasserbereich 13 trennt. Wie aus Figur 1 deutlich wird, ist der Rohwasserbereich 12 der Aufbereitungsvorrichtung 9 zuströmseitig über die Zufuhrleitung 8 mit der Auffangeinrichtung 6 verbunden und mündet abströmseitig ebenfalls in diese Auffangeinrichtung 6, von wo das eingeleitete Konzentrat mit dem abgeführten Waschwasser vermischt und erneut der Aufbereitungsvorrichtung 9 und ihrer Membran 11 zugeführt wird.

Das abgeführte Waschwasser wird somit in einem im wesentlichen geschlossenen Wasserkreislauf immer wieder für nachfolgende Waschvorgänge verwendet, so daß praktisch kein Abwasser aus den einzelnen Waschvorgängen in die Kanalisation eingeleitet werden muß und allenfalls nur ein geringer, durch Verdampfung oder dergleichen entstandener Waschwasser-Schwund auszugleichen ist.

Figur 2 zeigt eine Waschanlage 14, die ähnlich wie die Waschanlage 1 aus Figur 1 aufgebaut ist. Auch bei der Waschanlage 14 ist die als Sammelbecken ausgebildete Auffangeinrichtung 6 mit einer Aufbereitungsvorrichtung 9 verbunden, welche eine semipermeable Membran 11 aufweist. Während gröbere Schmutzpartikel sich bereits in der Auffangeinrichtung 6 absetzen können, werden feinere Schmutzpartikel in einem in die Zufuhrleitung 8 zwischengeschalteten und der Aufbereitungsvorrichtung 9 in Strömungsrichtung vorgeschalteten siebartigen Vorfilter 15 abgefangen. Insbesondere auch diese Vorreinigung erlaubt es, daß an der Rohwasserseite 12 der Membran 11 vorbeiströmende Konzentrat anschließend zur Vor- oder Hauptwäsche zu verwenden, wobei diese Waschvorgänge geringere Anforderungen an die Wasserqualität stellen. Der Rohwasserbereich 12 ist daher abströmseitig mit den beiden Waschwasser-Auslässen 2, 3, verbunden. Demgegenüber führt der Reinwasserbereich 13 der Aufbereitungsvorrichtung 9 aus Figur 2 nur zu den beiden anderen, dem Wachswasch- sowie dem Klarspülvorgang zugeordneten Waschwasser-Auslässen 4, 5 da diese Waschvorgänge höhere Anforderungen an die Wasserqualität des zur Verfügung gestellten Waschwassers stellen.

Den Aufbereitungsvorrichtungen 9 der hier dargestellten Waschanlagen wird das aufgefangene Waschwasser über die Förderpumpe 7 in der Phase der Reinwasserherstellung mit einem Betriebsdruck zugeführt, der den osmotischen Gegendruck im Bereich der Membran 11 oder Membranen übersteigt. Unter der treibenden Kraft der Druckdifferenz auf der Reinwasserseite kann eine Teilmenge des der Aufbereitungsvorrichtung 9 als Rohwasser zugeführten Waschwassers die Membran 11 als Reinwasser passieren, während die Restmenge des Rohwassers den Rohwasserbereich 12 der Membran 11 als Konzentrat verläßt. Vorzugsweise werden die hier dargestellten Aufbereitungsvorrichtungen 9 in einer Umkehrosmosetechnik betrieben.

In Figur 3 ist eine Waschanlage 16 dargestellt, deren Aufbereitungsvorrichtung 9 in Zeitabständen automatisch gereinigt wird, um einen ordnungsgemäßen Wasserkreislauf des Waschwassers auch über einen langen Zeitraum zu gewährleisten. Die beiden zum Rohwasserbereich 12 der Membran 11 führenden Vorrichtungsöffnungen oder -leitungen 17, 18 der Aufbereitungsvorrichtung 9 sind dazu mit jeweils einer Wasserleitung 19, 20 verbunden, die ihrerseits zuströmseitig und abströmseitig über jeweils ein Mehrwegeventil 21, 22 miteinander verbunden sind. Dabei sind die zuströmseitigen Leitungsabschnitte 19a, 20a der Wasserleitungen 19, 20 mit der Zufuhrleitung 8 sowie der Förderpumpe 7 verbunden, während die von den Vorrichtungsöffnungen oder -leitungen 17, 18 abgehenden Leitungsabschnitte 19b, 20b über das Mehrwegeventil 22 sowie die gemeinsame Rückführleitung 23 wieder in der Auffangeinrichtung 6 münden.

Die beiden Mehrwegeventile 21, 22 sind Teil einer Strömungsumkehreinrichtung, die eine Umkehrung der Fließrichtung des an der Membran 11 vorbeiströmenden Rohwassers in Zeitintervallen erlaubt. Durch eine solche Fließrichtungsumkehr werden die zum Rohwasserbereich 12 führenden Vorrichtungsöffnungen 17, 18 der Aufbereitungsvorrichtung 9 in Zeitintervallen wechselweise als Wassereinlaß oder als Wasserauslaß benutzt, so daß jeder der beiden rohwasserseitigen Endbereiche der Aufbereitungsvorrichtung vorübergehend den zuströmseitigen und somit stärker mit Schmutzpartikeln belasteten Endbereich bildet, während der jeweils abströmseitige Endbereich vom Rohwasser durchgespült werden kann. Auf diese Weise läßt sich auch bei stark verschmutztem Waschwasser eine gleichmäßige Ausnützung der Membran 11 sowie eine vergleichsweise lange Membranstandzeit erreichen, was einem kontinuierlichen Wasserkreislauf des Waschwassers in der Waschanlage 16 begünstigt.

Um das Rohwasser im Rohwasserbereich 12 in der einen Strömungsrichtung an der Membran 11 vorbeizuführen, verbindet das Mehrwegeventil 21 die Zufuhrleitung 8 mit dem Leitungsabschnitt 20a, während der Leitungsabschnitt 19b über das Ventil 22 mit der Rückführleitung 23 verbunden ist. Das an der Membran vorbeiströmende Rohwasser fließt in der umgekehrten Strömungsrichtung, wenn das Mehrwegeventil 21 die Zufuhrleitung 8 mit dem Leitungsabschnitt 19a und das Mehrwegeventil 22 den Leitungsabschnitt 20b mit der Rückführleitung 23 verbindet.

Um auch die Membran 11 der Aufbereitungsvorrichtung 9 aus Figur 3 in einer kurzen Spülphase durchspülen und reinigen zu können, ist vorgesehen, den auf der Rohwasserseite 12 der Aufbereitungsvorrichtung 9 bestehenden statischen Wasserdruck relativ zu dem auf der Reinwasserseite 13 bestehenden statischen Wasserdruck in Zeitintervallen kurzzeitig, vorzugsweise schlagartig, zu senken. In dieser Spülphase, in der im Gegensatz zur Phase der Reinwasserherstellung umgekehrte statische Druckverhältnisse im Roh- und Reinwasserbereich der Aufbereitungsvorrichtung 9 herrschen, tritt Reinwasser vom Reinwasserbereich 13 in den Rohwasserbereich 12 über und reinigt dabei die Membranporen der Membran 11.

Dazu werden in der Spülphase der Aufbereitungsvorrichtung 9 aus Figur 3 die Ventile 21, 22 sowie ein dem Reinwasserauslaß 10 zugeordnetes Sperrventil 24 geschlossen, so daß sich sowohl auf der Rohwasser- wie auch auf der Reinwasserseite 12, 13 der Membran 11 der Wasserdruck in etwa angleicht. Werden nun vor, während oder nach einer Fließrichtungsumkehr nur die Mehrwegeventile 21, 22 in einer der beiden Fließrichtungen des Rohwassers geöffnet, so steht dem statischen Druck auf der Reinwasserseite 13 ein - gemäß der Bernoullischen Gleichung - demgegenüber niedrigerer statischer Wasserdruck gegenüber auf der Rohwasserseite, was das erwähnte Durchspülen der Membranporen durch das Reinwasser zur Folge hat. Zur Senkung des auf der Rohwasserseite 12 bestehenden statischen Wasserdruckes kann auch die Fließgeschwindigkeit und somit der dynamische Wasserdruck des an der Membran vorbeiströmenden Rohwassers erhöht werden.

Insbesondere bei einem hohen Salzgehalt des aufgefangenen Waschwassers kann es vorteilhaft sein, wenn der Aufbereitungsvorrichtung 9 in Figur 3 zum zeitweisen Durchströmen in einer umgekehrten Fließrichtung, insbesondere während einer kurzfristigen Absenkung des statischen Wasserdruckes auf der Rohwasserseite 12 im Vergleich zu dem auf der Reinwasserseite bestehenden Wasserdruck in der Spülphase, vorübergehend Reinwasser oder salzärmeres Wasser als Rohwasser zugeführt wird. Dabei ist es zweckmäßig, wenn die für eine Fließrichtungsumkehr und/oder für eine Änderung des Wasserdrucks an der Membran vorgesehenen Zeitintervalle und/oder die Höhe der Wasserdruck-Änderung an der Membran 11 während der Spülphase in Abhängigkeit vom Verschmutzungsgrad des nach den Waschvorgängen abgefangenen und der Aufbereitungsvorrichtung 9 als Rohwasser zugeführten Waschwassers gewählt werden.

In Figur 3 ist angedeutet, daß zwischen dem Reinwasserbereich 13, dem Sperrventil 24 des Reinwasserauslasses 10 ein mit dem Reinwasserbereich 13 der Aufbereitungsvorrichtung 9 vorzugsweise rückschlagventilfrei verbundener Zwischenspeicher vorgesehen ist, der während der Spülphase eine größere Menge des Reinwassers oder Permeats zum Durchspülen der Membranporen zur Verfügung stellt. Ein besonders wirkungsvoller Spüleffekt läßt sich während der Spülphase erreichen, wenn die Sperrventile als Kugelhähne oder dergleichen schnellschließende Armaturen ausgebildet sind, die eine schlagartige Änderung der Druckverhältnisse im Bereich der Membran 11 begünstigen.

Wie Figur 3 zeigt, muß der Aufbereitungsvorrichtung 9 kein siebartiges und in der Umkehrosmosetechnik ansonsten übliches Vorfilter vorgeschaltet werden, da die Aufbereitungsvorrichtung 9 und ihre Membran 11 in Zeitabständen durch eine Fließrichtungsumkehr sowie durch eine Umkehr der auf der Rohwasser- sowie der Reinwasserseite 12, 13 bestehenden Druckverhältnisse immer wieder gereinigt wird. Um einer Verschmutzung der Aufbereitungsvorrichtung 9 noch zusätzlich entgegenzuwirken, kann es vorteilhaft sein, wenn dem Rohwasser in Fließrichtung vor der Membran chemische Anschwemmhilfen, Adsorbtionsmittel und/oder Absorptionsmittel, beispielsweise Aktivkohle-Pulver, zugeführt werden, die einen Teil der Schmutzpartikel aufnehmen und bis zur nächsten Fließrichtungsumkehr vor der Membran 11 anlagern.

Wie bei den Waschanlagen 1, 14 und 25, weist auch die Aufbereitungsvorrichtung 9 der Waschanlage 16 aus Figur 3 ein handelsübliches sogenanntes Wickelmodul auf, das in einem hier nicht dargestellten und mit der zu- und abströmseitigen Rohwasserleitung verbundenen Vorrichtungsgehäuse der Aufbereitungsvorrichtung 9 untergebracht sein kann. Dabei wird der zwischen dem Wickelmodul und dem Vorrichtungsgehäuse gebildete Ringspalt mittels einer Ringdichtung abgedichtet, die vorzugsweise an einem Endbereich des Wickelmoduls angeordnet ist und die den Ringspalt nur in einer Strömungsrichtung abdichtet sowie in dazu entgegengesetzter Strömungsrichtung durchlässig ist. Auf diese Weise wird der zwischen dem Vorrichtungsgehäuse und dem Wickelmodul gebildete Ringspalt vom Rohwasser ebenfalls durchspült und gereinigt, wenn das Rohwasser in der entsprechenden Strömungsrichtung durch die Aufbereitungsvorrichtung 9 fließt. Zweckmäßig kann es sein, wenn zumindest eine, in Strömungsrichtung vordere Stirnseite des Wickelmoduls als Anschwemm- und/oder Vorfilter dient.

In Figur 4 ist eine Waschanlage 25 dargestellt, deren Aufbereitungsvorrichtung 9 zwei Aufbereitungsstufen mit jeweils einem Wickelmodul oder einer semipermeablen Membran 11a, 11b hat. Dabei ist die Membran 11a der ersten Aufbereitungsstufe und die Membran 11b der zweiten Aufbereitungsstufe zugeordnet. Der Rohwasserbereich 12 der ersten Aufbereitungsstufe ist zu- und abströmseitig mit der Auffangeinrichtung 6 der Waschanlage 25 verbunden, während ihr Reinwasserbereich 13 zum Rohwasserbereich 12 der die Membran 11b aufweisenden zweiten Aufbereitungsstufe führt. Der Reinwasserbereich sowie der Rohwasserbereich der zweiten Aufbereitungsstufe sind abströmseitig mit den Waschwasser-Auslässen 2 bis 5 verbunden, wobei die für den Vor- und Hauptwaschvorgang vorgesehenen Waschwasser-Auslässe 2, 3 dem Rohwasserbereich 12 und die für den Wachswasch- sowie den Klarwasch-Vorgang vorgesehenen Waschwasser-Auslässe 4, 5 dem Reinwasserbereich 13 der zweiten Aufbereitungsstufe zugeordnet sind. Auch bei einer hohen Salzkonzentration des nach den Waschvorgängen abgefangenen und der Aufbereitungsvorrichtung 9 zugeführten Waschwassers weist das Permeat oder Reinwasser nach der zweiten Aufbereitungsstufe einen sehr niedrigen Salzgehalt auf und auch das Konzentrat dieser zweiten Aufbereitungsstufe hat eine im Vergleich zu lediglich vorgefiltertem Wasser wesentlich bessere Qualität.

In den Figuren 1 bis 4 werden Ausführungsformen gezeigt, deren Aufbereitungsvorrichtungen 9 in ihrer Reinwasser-Produktionsleistung so groß dimensioniert sind, daß sie den aktuellen Waschwasser-Bedarf der Waschanlagen 1, 14, 16 und 25 decken, ohne daß das in den Aufbereitungsvorrichtungen 9 als Waschwasser wieder aufbereitete Permeat und/oder das an den Membranen 11 vorbeiströmende Konzentrat zwischengespeichert werden müßte. Um die Aufbereitungsvorrichtung in ihrer Leistung jedoch nicht an eine eventuell nur selten benötigte Spitzenleistung anpassen und entsprechend groß dimensionieren zu müssen, kann es vorteilhaft sein, das abgeführte und an die Aufbereitungsvorrichtung weiterzuleitende Waschwasser und/oder das hergestellte Reinwasser zunächst in Zwischenspeichern zu sammeln, um trotz eines diskontinuierlichen Betriebes der Anlage stets ausreichend Waschwasser zur Verfügung stellen zu können.

Insbesondere bei den hier dargestellten Ausführungsformen, die in der Umkehrosmosetechnik arbeiten, weist das in den Aufbereitungsvorrichtungen 9 gereinigte Wasch- oder Reinwasser einen vergleichsweise geringen Salzgehalt auf, so daß lediglich geringere Mengen von Waschmitteln oder dergleichen Chemikalien erforderlich sind. Ein geringerer Salz- oder Chemikaliengehalt des den Aufbereitungsvorrichtungen 9 zugeführten Waschwassers erfordert aufgrund des geringeren osmotischen Gegendrucks einen geringen Betriebsdruck bei der Umkehrosmose, was der einfachen Herstellung des in einem nahezu geschlossenen Wasserkreislauf geführten Waschwassers entgegenkommt.

## Patentansprüche

1. Verfahren zur Herstellung und Bereitstellung von Waschwasser für eine Waschanlage, insbesondere eine Autowaschanlage, bei dem das Waschwasser in zumindest einem Waschvorgang zur Reinigung eines Kraftfahrzeuges oder dergleichen verwendet und nach einem Waschvorgang zumindest teilweise wiederverwendet wird, wobei wenigstens eine Teilmenge des abgeführten Waschwassers dazu aufgefangen und als Rohwasser einer Filteranlage oder dergleichen Aufbereitungsvorrichtung zugeführt wird, die zumindest eine semipermeable Membran hat, welche eine Teilmenge des zugeführten Rohwassers unter der treibenden Kraft einer Druckdifferenz als Reinwasser passiert, das mindestens einem nachfolgenden Waschvorgang als Waschwasser zugeführt wird, **dadurch gekennzeichnet**, daß das Waschwasser nach jedem Waschvorgang in einem im wesentlichen geschlossenen Wasserkreislauf für nachfolgende Waschvorgänge wiederverwendet wird, daß die Fließrichtung an der als Wickelmodul ausgebildeten semipermeablen Membran (11) vorbeiströmenden Rohwassers in Zeitintervallen umgekehrt oder gewechselt wird und daß die Restmenge des an der Membran (11) vorbeiströmenden Rohwassers den Rohwasserbereich (12) der Membran (11) als Konzentrat verläßt und erneut einer semipermeablen Membran (11) und/oder einem nachfolgenden Waschvorgang mit vorzugsweise geringeren Anforderungen an die Wasserqualität zugeführt wird.

2. Verfahren nach Anspruch 1, dadurch gekennzeichnet, daß das Reinwasser nachfolgenden Waschvorgängen mit höheren Anforderungen an die Wasserqualität und das Konzentrat solchen nachfolgenden Waschvorgängen mit demgegenüber geringeren Anforderungen an die Wasserqualität zugeführt wird.

3. Verfahren nach Anspruch 1 oder 2, dadurch gekennzeichnet, daß die an der Membran (11) vorbeiströmende Konzentrat-Restmenge dem nach den Waschvorgängen aufgefangenen Waschwasser beigemischt und erneut der Membran (11) als Rohwasser zugeführt wird.

4. Verfahren nach einem der Ansprüche 1 bis 3, dadurch gekennzeichnet, daß mittels einer zeitweisen Reduzierung oder Unterbrechung des Reinwasserabflusses an der Membran (11) eine Erhöhung des statischen Wasserdrucks auf der Reinwasserseite (13) der Membran (11) bewirkt wird und daß nach einer statischen Druckerhöhung auf der Reinwasserseite (13), insbesondere nach einer angleichung des statischen Wasserdrucks auf beiden Seiten der Membran (11), der auf der Rohwasserseite (12) der Aufbereitungsvorrichtung (9) bestehende statische Wasserdruck relativ zu dem auf der Reinwasserseite (13) bestehenden statischen Wasserdruck in Zeitintervallen kurzzeitig, vorzugsweise schlagartig, gesenkt wird.

5. Verfahren nach einem der Ansprüche 1 bis 4, dadurch gekennzeichnet, daß zur Senkung des auf der Rohwasserseite (12) bestehenden statischen Wasserdruckes die Fließgeschwindigkeit des an der Membran (11) vorbeiströmenden Rohwassers erhöht wird.

6. Verfahren nach einem der Ansprüche 1 bis 5, dadurch gekennzeichnet, daß der Rohwasserabfluß sowie der Reinwasserabfluß an der Membran (11) in Zeitintervallen kurzfristig reduziert oder unterbrochen werden und daß vor einer Öffnung oder Erhöhung des Reinwasserabflusses eine Öffnung oder Erhöhung des Rohwasserabflusses an der Membran (11) vorzugsweise in einer im Vergleich zu der Strömungsrichtung des vor der Reduzierung oder Unterbrechung an der Membran (11) vorbeiströmenden Rohwassers umgekehrten Fließrichtung erfolgt.

7. Verfahren nach einem der Ansprüche 1 bis 6, dadurch gekennzeichnet, daß die für eine Fließrichtungsumkehr und/oder für eine Änderung des Wasserdrucks an der Membran (11) vorgesehenen Zeitintervalle und/oder die Höhe der Wasserdruck-Änderung an der Membran (11) in Abhängigkeit vom Verschmutzungsgrad des abgefangenen und der Aufbereitungsvorrichtung (9) als Rohwasser zugeführten Waschwassers gewählt werden.

8. Verfahren nach einem der Ansprüche 1 bis 7, dadurch gekennzeichnet, daß der Aufbereitungsvorrichtung (9) vorzugsweise zum zeitweisen Durchströmen in einer umgekehrten Fließrichtung, insbesondere während einer kurzfristigen Absenkung des statischen Wasserdruckes auf der Rohwasserseite (12) im Vergleich zu dem auf der Reinwasserseite (13) bestehenden statischen Wasserdruck, vorübergehend Reinwasser oder ein im Vergleich zum bisher verwendeten Rohwasser salzärmeres Wasser als Roh- oder Speisewasser zugeführt wird.

9. Verfahren nach einem der Ansprüche 1 bis 8, dadurch gekennzeichnet, daß dem Rohwasser in Fließrichtung vor der Membran (11) chemische Anschwemmhilfen, Adsorbtionsmittel und/oder Absorptionsmittel zugeführt werden.

10. Verfahren nach einem der Ansprüche 1 bis 9, dadurch gekennzeichnet, daß das Verfahren zur Reinwasserherstellung ein Umkehrosmoseverfahren ist.

11. Waschanlage, insbesondere Autowaschanlage, mit zumindest einem Brausekopf oder dergleichen Waschwasser-Auslaß, welcher zum Ausbringen des Waschwassers auf ein Kraftfahrzeug oder dergleichen zu reinigenden Gegenstand vorgesehen ist, wobei die Waschanlage eine Auffangeinrichtung zum Auffangen des Waschwassers nach jedem Waschvorgang hat, die mit einer Wasser-Aufbereitungsvorrichtung zum Aufbereiten zumindest eines Teils des aufgefangenen Wassers verbunden ist und deren Filtrat- oder Reinwasserauslaß mit wenigstens einem Waschwasser-Auslaß der Waschanlage verbunden ist, wobei die Aufbereitungsvorrichtung wenigstens eine semipermeable Membran hat, die einen Rohwasserbereich der Aufbereitungsvorrichtung von einem Reinwasserbereich trennt, dadurch gekennzeichnet, daß die semipermeable Membran (11) als Wickelmodul ausgebildet ist, daß die Fließrichtung des auf der Rohwasserseite (12) an der Membran (11) der Aufbereitungsvorrichtung (9) vorbeiströmenden Wassers mittels einer Strömungs-Umkehreinrichtung umkehrbar ist und dazu die zum Rohwasserbereich (12) der Aufbereitungsvorrichtung (9) führenden Vorrichtungsöffnungen (17, 18) in Zeitintervallen wechselweise als ein zuströmseitig mit der Auffangeinrichtung (6) verbundener Wassereinlaß oder als ein zu einem Waschwasser-Auslaß (2, 3) der Waschanlage und/oder zu einer semipermeablen Membran (11)führender Wasserauslaß vorgesehen sind, und daß der Reinwasserbereich (13) der Aufbereitungsvorrichtung (9) mit wenigstens einem weiteren Waschwasser-Auslaß (4, 5) der Waschanlage verbunden ist.

12. Waschanlage nach Anspruch 11, dadurch gekennzeichnet, daß der Rohwasserbereich (12) der Aufbereitungsvorrichtung (9) zur Rückleitung des an der Membran (11) vorbeiströmenden Konzentrats abströmseitig in der Auffangeinrichtung (6) mündet.

13. Waschanlage nach Anspruch 11 oder 12, dadurch gekennzeichnet, daß die mit dem Reinwasserbereich (13) der Aufbereitungsvorrichtung (9) verbundenen Waschwasser-Auslässe (4, 5) für Waschvorgänge oder Waschstationen mit höheren Anforderungen an die Wasserqualität und die mit dem Rohwasserbereich (12) verbundenen Waschwasser-Auslässe (2, 3) für Waschvorgänge oder Waschstationen mit demgegenüber geringeren Anforderungen an die Wasserqualität vorgesehen sind.

14. Waschanlage nach einem der Ansprüche 11 bis 13, dadurch gekennzeichnet, daß die Aufbereitungsvorrichtung zumindest zwei semipermeable Membranen (11a, 11b) hat, von denen die eine Membran (11a) einer ersten Aufbereitungsstufe und von denen die andere Membran (11b) einer zweiten Aufbereitungsstufe zugeordnet ist, daß der Rohwasserbereich (12) der ersten Aufbereitungsstufe zuströmseitig und abströmseitig mit der Auffangeinrichtung (6) und ihr Reinwasserbereich (13) mit dem Rohwasserbereich (12) der zweiten Aufbereitungsstufe verbunden ist und daß der Reinwasserbereich (13) sowie der Rohwasserbereich (12) der zweiten Aufbereitungsstufe abströmseitig jeweils zu zumindest einem Waschwasser-Auslaß (2, 3, 4, 5) führen.

15. Waschanlage nach einem der Ansprüche 11 bis 14, dadurch gekennzeichnet, daß zur wechselweisen Druckanpassung und Druckänderung des im Rohwasser- sowie im Reinwasserbereich der Aufbereitungsvorrichtung (9) bestehenden Wasserdrucks der Reinwasser-Auslaß (10) und die zum Rohwasserbereich (12) führenden Vorrichtungsöffnungen (17, 18) jeweils mittels eines Sperrventiles oder dergleichen Absperr- oder Regelorganes (21, 22, 24) regulierbar sind.

16. Waschanlage nach Anspruch 15, dadurch gekennzeichnet, daß die Absperr- und Regelorgane als Kugelhähne oder dergleichen schnellschließende Armaturen ausgebildet sind.

17. Waschanlage nach einem der Ansprüche 11 bis 16, dadurch gekennzeichnet, daß zwischen dem Reinwasserbereich (13) der Membran (11) und dem Sperrventil (24) des Reinwasserauslasses (10) ein mit dem Reinwasserberelch (13) der Auf bereitungsvorrichtung (9) vorzugsweise rückschlagventilfrei verbundener Zwischenspeicher (26) vorgesehen ist.

18. Waschanlage nach einem der Ansprüche 11 bis 17, dadurch gekennzeichnet, daß die Aufbereitungsvorrichtung (9) wenigstens ein Wickelmodul als semipermeable Membran (11) aufweist und daß zumindest eine Stirnseite des Wickelmoduls vorzugsweise als Anschwemm- und/oder Vorfilter dient.

19. Waschanlage nach Anspruch 18, dadurch gekennzeichnet, daß die Aufbereitungsvorrichtung (9) ein Vorrichtungsgehäuse zur Aufnahme eines Wickelmoduls hat, dessen Gehäuseinneres mit der zu- und abströmseitigen Rohwasser- oder Speisewasserleitung verbunden ist und daß in dem zwischen dem Wickelmodul und dem Vorrichtungsgehäuse gebildeten Ringspalt eine Ringdichtung vorgesehen ist, die vorzugsweise an einem Endbereich des Wickelmoduls angeordnet ist und die den Ringspalt nur in einer Strömungsrichtung abdichtet sowie in dazu entgagengesetzter Strömungsrichtung durchlässig ist.

## Claims

1. A process for producing and feeding wash water in a washing installation, in particular a car washing installation, wherein the wash water is used in at least one washing process for cleaning a motor vehicle or the like and after a washing process is reused at least in part, whereby at least part of the evacuated wash water is collected and supplied as raw water to a filtering installation or similar treatment apparatus having at least one semi-permeable membrane, under the driving force of a pressure difference part of the supplied raw water going through the membrane as pure water which is supplied as wash water to at least one ulterior washing process, **characterized in that** after each washing process the wash water is reused in an essentially closed water circuit for successive washing processes, that the direction of flow of the raw water flowing by the semi-permeable membrane (11) in the form of a wound module is reversed or changed at intervals of time, and that the remaining raw water flowing by the membrane (11) leaves the raw water zone (12) of the membrane (11) as concentrate and is supplied again to a semi-permeable membrane (11) and/or to a successive washing process with preferably lesser demands on the quality of the water.

2. A process as claimed in claim 1, characterized in that the pure water is supplied to successive washing processes with higher demands on the quality of the water and the concentrate is supplied to such successive washing processes with lesser demands on the quality of the water.

3. A process as claimed in claim 1 or claim 2, characterized in that the remaining concentrate flowing by the membrane (11) is admixed to the wash water collected after the washing processes and is again supplied as raw water to the membrane (11).

4. A process as claimed in any one of claims 1 to 3, characterized in that an increase in the static water pressure on the pure water side (13) of the membrane (11) is brought about by means of an intermittent reduction or interruption of the outflow of pure water at the membrane (11), and that after a static pressure increase on the pure water side (13), particularly after a balancing of the static water pressure on both sides of the membrane (11), the static water pressure prevailing on the raw water side (12) of the treatment apparatus (9) is periodically lowered momentarily, preferably abruptly, relative to the static water pressure prevailing on the pure water side (13).

5. A process as claimed in any one of claims 1 to 4, characterized in that the flow rate of the raw water flowing by the membrane (11) is increased to lower the static water pressure prevailing on the raw water side (12).

6. A process as claimed in any one of claims 1 to 5, characterized in that the outflow of raw water and the outflow of pure water at the membrane (11) is periodically reduced or interrupted for a short time, and that before the outflow of pure water is opened or increased the outflow of raw water at the membrane (11) is opened or increased preferably in a reversed direction of flow compared to the direction of flow of the raw water flowing by the membrane (11) prior to the reduction or interruption.

7. A process as claimed in any one of claims 1 to 6, characterized in that the time intervals provided for reversing the direction of flow and/or for altering the water pressure at the membrane (11) and/or the level of change in water pressure at the membrane (11) are selected in dependence on the degree of pollution of the wash water collected and supplied as raw water to the treatment apparatus (9).

8. A process as claimed in any one of claims 1 to 7, characterized in that pure water or a less saliferous water compared to the formerly used raw water is temporarily supplied as raw water or feed water to the treatment apparatus (9), preferably for intermittent passage in a reverse direction of flow, particularly during a short-term lowering of the static water pressure on the raw water side (12) compared to the static water pressure prevailing on the pure water side (13).

9. A process as claimed in any one of claims 1 to 8, characterized in that chemical deposit aids, adsorbing agents and/or absorbing agents are supplied to the raw water before the membrane (11) in the direction of flow.

10. A process as claimed in any one of claims 1 to 9, characterized in that the process for producing pure water is a reverse osmosis provess.

11. A washing installation, particularly a car washing installation, with at least one spray head or similar wash water outlet which is provided for applying the wash water to a motor vehicle or similar object to be cleaned, whereby the washing installation has an arrangement for collecting the wash water after each washing process, which collecting arrangement is connected to a water treatment apparatus for treating at least part of the collected water and the filtrate or pure water outlet (10) of said treatment apparatus is connected to at least one wash water outlet of the washing installation, whereby the treatment apparatus has at least one semi-permeable membrane (11) which separates a raw water zone of the treatment apparatus from a pure water zone, characterized in that the semi-permeable membrane (11) takes the form of a wound module, that the direction of flow of the water flowing by the membrane (11) of the treatment apparatus (9) on the raw water side (12) is reversible by means of a flow reversal means and for this purpose the apparatus openings (17, 18) leading to the raw water zone (12) of the treatment apparatus (9) serve alternately and periodically as a water inlet connected on the inflow side to the collecting arrangement (6) or as a water outlet leading to a wash water outlet (2, 3) of the washing installation and/or to a semi-permeable membrane (11), and that the pure water zone (13) of the treatment apparatus (9) is connected to at least one further wash water outlet (4, 5) of the washing installation.

12. A washing installation as claimed in claim 11, characterized in that the raw water zone (12) of the treatment apparatus (9) ends on the outflow side in the collecting arrangement (6) for returning the concentrate flowing by the membrane (11).

13. A washing installation as claimed in claim 11 or claim 12, characterized in that the wash water outlets (4, 5) connected to the pure water zone (13) of the treatment apparatus (9) are provided for washing processes or washing stations with higher demands on the quality of the water and the wash water outlets (2, 3) connected to the raw water zone (12) are provided for washing processes or washing stations with lower demands on the quality of the water.

14. A washing installation as claimed in any one of claims 11 to 13, characterized in that the treatment apparatus has at least two semi-permeable membranes (11a, 11b), the one membrane (11a) thereof being associated to a first treatment stage and the other membrane (11b) thereof being associated to a second treatment stage, that the raw water zone (12) of the first treatment stage is connected on the inflow and outflow side to the collecting arrangement (6), and the pure water zone (13) of the first treatment stage is connected to the raw water zone (12) of the second treatment stage, and that the pure water zone (13) and raw water zone (12) of the second treatment stage in each case lead on the outflow side to at least one wash water outlet (2, 3, 4, 5).

15. A washing installation as claimed in any one of claims 11 to 14, characterized in that for the alternate pressure adjustment and change of the water pressure prevailing in the raw water zone and in the pure water zone of the treatment apparatus (9), the pure water outlet (10) and the apparatus openings (17, 18) leading to the raw water zone (12) are in each case regulable by means of a stop valve or similar shutting off or control element (21, 22, 24).

16. A washing installation as claimed in claim 15, characterized in that the shutting off and control elements take the form of ball valves or similar quick-action valves.

17. A washing installation as claimed in any one of claims 11 to 16, characterized in that a reservoir (26) connected, preferably without a check valve, to the pure water zone (13) of the treatment apparatus (9) is provided between the pure water zone (13) of the membrane (11) and the stop valve (24) of the pure water outlet (10).

18. A washing installation as claimed in any one of claims 11 to 17, characterized in that the treatment apparatus (9) has at least one wound module as semi-permeable membrane (11) and that at least one front face of the wound module preferably serves as a precoat filter and/or prefilter.

19. A washing installation as claimed in claim 18, characterized in that the treatment apparatus (9) has an apparatus housing to accommodate a wound module, the housing interior thereof being connected to the raw water line or feed water line on the inflow and outflow side, and that provided in the annular gap formed between the wound module and the apparatus housing there is a ring seal which is preferably arranged at an end zone of the would module and seals the annular gap only in one direction of flow and is permeable in the opposite direction of flow.

## Revendications

1. Procédé de production et de mise à disposition d'eau de lavage dans une installation de lavage, notamment dans une installation de lavage de voitures, selon lequel l'eau de lavage est utilisée au cours d'au moins un processus de lavage pour nettoyer un véhicule automobile et, à la suite d'un processus de lavage, est au moins partiellement réutilisée, au moins une quantité partielle de l'eau de lavage évacuée étant à cet effet recueillie et apportée comme eau brute à une installation de filtration ou dispositif de traitement analogue, qui possède au moins une membrane semi-perméable qui, sous la force propulsive d'une différence de pression, laisse passer une quantité partielle de l'eau brute apportée comme eau pure, qui est apportée comme eau de lavage pour au moins un processus de lavage consécutif, **caractérisé** en ce que l'eau de lavage est, après chaque processus de lavage, recyclée dans un circuit d'eau essentiellement fermé pour des processus de lavage consécutifs, en ce que la direction d'écoulement de l'eau brute passant la membrane semi-perméable (11) réalisée sous forme de module enroulé est, à intervalles de temps, changée ou inversée et en ce que la quantité résiduelle de l'eau brute passant la membrane (11) quitte la zone d'eau brute (12) de la membrane (11) sous forme de concentré, et est à nouveau apportée à une membrane semi-perméable (11) et/ou à un processus de lavage consécutif ayant, de préférence, des exigences moindres concernant la qualité de l'eau.

2. Procédé selon la revendication 1, **caractérisé** en ce que l'eau pure est apportée à des processus de lavage consécutifs ayant des exigences supérieures concernant la qualité de l'eau, et le concentré à des processus de lavage consécutifs ayant des exigences moindres concernant la qualité de l'eau.

3. Procédé selon la revendication 1 ou 2, **caractérisé** en ce que la quantité résiduelle de concentré passant la membrane (11) est mélangée à l'eau de lavage recueillie après les processus de lavage, et apportée à nouveau comme eau brute à la membrane (11).

4. Procédé selon l'une des revendications 1 à 3, **caractérisé** en ce qu'au moyen d'une réduction ou interruption périodique du flux d'eau pure quittant la membrane (11), on produit une augmentation de la pression d'eau statique sur le côté d'eau pure (13) de la membrane (11), et en ce qu'après une augmentation de la pression statique sur le côté d'eau pure (13), notamment après un équilibrage de la pression d'eau statique sur les deux côtés de la membrane (11), la pression d'eau statique régnant sur le côté d'eau brute (12) du dispositif de traitement (9) est temporairement abaissée, de préférence brusquement, à intervalles de temps, par rapport à la pression d'eau statique régnant sur le côté d'eau pure (13).

5. Procédé selon l'une des revendications 1 à 4, **caractérisé** en ce qu'afin d'abaisser la pression d'eau statique régnant sur le côté d'eau brute (12), on augmente la vitesse d'écoulement de l'eau brute qui passe la membrane (11).

6. Procédé selon l'une des revendications 1 à 5, **caractérisé** en ce que le flux d'eau brute et le flux d'eau pure qui quittent la membrane (11) sont brièvement réduits ou interrompus à intervalles de temps, et en ce qu'avant d'ouvrir ou d'augmenter le flux sortant d'eau pure, on effectue une ouverture ou augmentation du flux d'eau brute quittant la membrane (11), de préférence dans une direction d'écoulement inversée par rapport à la direction d'écoulement de l'eau brute passant la membrane (11) avant la réduction ou interruption.

7. Procédé selon l'une des revendications 1 à 6, **caractérisé** en ce que les intervalles de temps prévus pour une inversion de la direction d'écoulement et/ou pour une modification de la pression d'eau à la membrane (11), et/ou l'importance de la modification de la pression d'eau à la membrane (11), sont choisis en fonction du degré d'encrassement de l'eau de lavage recueillie et apportée comme eau brute au dispositif de traitement (9).

8. Procédé selon l'une des revendications 1 à 7, **caractérisé** en ce qu'on apporte provisoirement comme eau brute ou eau d'alimentation au dispositif de traitement (9), de préférence pour un passage périodique dans une direction d'écoulement inversée, notamment pendant un abaissement temporaire de la pression d'eau statique sur le côté d'eau brute (12) par rapport à la pression d'eau statique régnant sur le côté d'eau pure (13), de l'eau pure ou une eau moins saine que l'eau brute utilisée jusqu'alors.

9. Procédé selon l'une des revendications 1 à 8, **caractérisé** en ce qu'on apporte à l'eau brute, avant la membrane (11) dans la direction d'écoulement, des produits chimiques d'aide à la décantation, des agents adsorbants et/ou des agents absorbants.

10. Procédé selon l'une des revendications 1 à 9, **caractérisé** en ce que le procédé pour la production de l'eau pure est un procédé à osmose inverse.

11. Installation de lavage, notamment installation de lavage de voitures, avec au moins une tête d'arrosage ou sortie analogue d'eau de lavage, qui est prévue pour distribuer l'eau de lavage sur un véhicule automobile ou objet à nettoyer analogue, l'installation de lavage possédant un dispositif collecteur, destiné à recueillir l'eau de lavage à la suite de chaque processus de lavage, qui est relié à un dispositif de traitement d'eau pour traiter au moins une partie de l'eau recueillie et dont la sortie de filtrat ou d'eau pure est reliée à au moins une sortie d'eau de lavage de l'installation de lavage, le dispositif de traitement possédant au moins une membrane semi-perméable qui sépare une zone d'eau brute du dispositif de traitement d'une zone d'eau pure, **caractérisée** en ce que la membrane semi-perméable (11) est réalisée sous forme de module enroulé, en ce que la direction d'écoulement de l'eau passant la membrane (11) du dispositif de traitement (9) par le côté d'eau brute (12) peut être inversée au moyen d'un dispositif d'inversion d'écoulement et, à cet effet, les ouvertures du dispositif (17, 18) menant à la zone d'eau brute (12) du dispositif de traitement (9) sont, à intervalles de temps, alternativement prévues comme entrée d'eau reliée côté flux entrant au dispositif collecteur (6) ou comme sortie d'eau menant à une sortie d'eau de lavage (2, 3) de l'installation de lavage et/ou à une membrane semi-perméable (11), et en ce que la zone d'eau pure (13) du dispositif de traitement (9) est reliée à au moins une sortie supplémentaire d'eau de lavage (4, 5) de l'installation de lavage.

12. Installation de lavage selon la revendication 11, **caractérisée** en ce que la zone d'eau brute (12) du dispositif de traitement (9) débouche côté flux sortant dans le dispositif collecteur (6) pour le retour du concentré passant la membrane (11).

13. Installation de lavage selon la revendication 11 ou 12, **caractérisée** en ce que les sorties d'eau de lavage (4, 5) reliées à la zone d'eau pure (13) du dispositif de traitement (9) sont prévues pour des processus de lavage ou des postes de lavage ayant des exigences supérieures concernant la qualité de l'eau, et les sorties d'eau de lavage (2, 3) reliées à la zone d'eau brute (12) sont prévues pour des processus de lavage ou des postes de lavage ayant des exigences moindres concernant la qualité de l'eau.

14. Installation de lavage selon l'une des revendications 11 à 13, **caractérisée** en ce que le dispositif de traitement possède au moins deux membranes semi-perméables (11a, 11b), dont l'une (11a) est associée à un premier étage de traitement et l'autre (11b) à un deuxième étage de traitement, en ce que la zone d'eau brute (12) du premier étage de traitement est reliée côté flux entrant et côté flux sortant au dispositif collecteur (6) et sa zone d'eau pure (13) est reliée à la zone d'eau brute (12) du deuxième étage de traitement, et en ce que la zone d'eau pure (13) ainsi que la zone d'eau brute (12) du deuxième étage de traitement mènent respectivement, côté flux sortant, à au moins une sortie d'eau de lavage (2, 3, 4, 5).

15. Installation de lavage selon l'une des revendications 11 à 14, **caractérisée** en ce que, pour l'adaptation et la modification alternatives de la pression d'eau régnant dans la zone d'eau brute ainsi que la zone d'eau pure du dispositif de traitement (9), la sortie d'eau pure (10) et les ouvertures du dispositif (17, 18) menant à la zone d'eau brute (12) peuvent être respectivement régulées au moyen d'un robinet d'isolement ou d'un organe analogue (21, 22, 24) d'isolement ou de régulation.

16. Installation de lavage selon la revendication 15, **caractérisée** en ce que les organes d'isolement et de régulation sont réalisés sous la forme de robinets à boisseau sphérique ou d'appareils de robinetterie analogues à fermeture rapide.

17. Installation de lavage selon l'une des revendications 11 à 16, **caractérisée** en ce qu'est prévu, entre la zone d'eau pure (13) de la membrane (11) et le robinet d'isolement (24) de la sortie d'eau pure (10), un réservoir intermédiaire (26) relié à la zone d'eau pure (13) du dispositif de traitement (9) et, de préférence, dépourvu de clapet antiretour.

18. Installation de lavage selon l'une des revendications 11 à 17, **caractérisée** en ce que le dispositif de traitement (9) présente au moins un module enroulé comme membrane semi-perméable (11), et en ce qu'au moins un côté frontal du module enroulé sert, de préférence, de filtre de décantation et/ou de filtre préalable.

19. Installation de lavage selon la revendication 18, **caractérisée** en ce que le dispositif de traitement (9) possède un boîtier de dispositif pour recevoir un module enroulé, l'intérieur du boîtier étant relié à la conduite d'eau brute ou d'eau d'alimentation côté flux entrant et côté flux sortant, et en ce qu'un joint d'étanchéité annulaire est prévu dans l'espace annulaire formé entre le module enroulé et le boîtier du dispositif, joint qui, de préférence, est disposé dans une région terminale du module enroulé, et qui ne bouche la fente annulaire que dans une direction d'écoulement, et est perméable dans la direction d'écoulement opposée.
